# EUROPÄISCHE PATENTSCHRIFT

(11) **EP 2 150 729 B1**
(45) Veröffentlichungstag und Bekanntmachung des Hinweises auf die Patenterteilung: **10.11.2010**
(21) Anmeldenummer: 08760057.3
(22) Anmeldetag: 27.05.2008
(51) Int. Cl.: F16H 59/38, F16H 63/32, G01P 3/44

(54) **VORRICHTUNG ZUR ERMITTLUNG DER DREHZAHL EINER GETRIEBEWELLE**
DEVICE FOR DETERMINING THE ROTATIONAL SPEED OF A TRANSMISSION SHAFT
DISPOSITIF POUR DÉTERMINER LA VITESSE DE ROTATION D'UN ARBRE DE TRANSMISSION

(30) Priorität: 01.06.2007 DE 102007025666
(43) Veröffentlichungstag der Anmeldung: 10.02.2010
(73) Patentinhaber: ZF Friedrichshafen AG, 88038 Friedrichshafen (DE)
(72) Erfinder: FÜHRER, Kim, 88131 Lindau (DE)
(74) Vertreter: Gebhard, Wolfgang
(86) Internationale Anmeldenummer: PCT/EP2008/056459
(87) Internationale Veröffentlichungsnummer: WO 2008/145644

(56) Entgegenhaltungen:
- DE-A1- 19 703 488
- JP-A- 10 024 881
- US-A- 4 817 470

## Beschreibung

Die vorliegende Erfindung betrifft eine Vorrichtung zur Ermittlung der Drehzahl einer Getriebewelle nach der im Oberbegriff von Anspruch 1 näher definierten Art. Ferner betrifft die vorliegende Erfindung ein Getriebe, insbesondere für ein Kraftfahrzeug, mit einer solchen Vorrichtung.

Aus dem Stand der Technik sind Getriebe bekannt, die Drehzahlabgriffseinrichtungen zum Generieren eines Geschwindigkeitssignals für beispielsweise ein Kraftfahrzeug aufweisen. Diese Drehzahlabgriffseinrichtungen umfassen im Wesentlichen einen drehfest mit einer entsprechenden Getriebewelle verbundenen Signal- oder Drehzahlgeber, dem ein feststehender Drehzahlsensor zugeordnet ist, um die Drehzahl an dem Drehzahlgeber abzugreifen. Solche Einrichtungen sind z.B. aus DE 19703488 und US 4817470 bekannt.

In Kraftfahrzeuggetrieben mit 2 Vorgelegewellen ist eine Hauptwelle bekannterweise mit ausreichendem Spiel zwischen einer Antriebs- und einer Abtriebswelle gelagert, wobei sich die Hauptwelle im Lastbetrieb automatisch zentriert. Durch das vorgesehene Spiel kann die Hauptwelle im lastfreien Zustand unter Drehzahl entsprechende Bewegungen ausführen und sich sowohl axial als auch radial aus ihrer Sollposition bewegen. Die Bewegungsarten reichen hierbei von radialem Gleichlauf bis zu einer sogenannten Taumelbewegung, bei der sich die Wellenenden der Hauptwelle in entgegengesetzte Richtungen bewegen. Aus dem Stand der Technik ist es bekannt, dass die Drehzahlerfassung mittels einer mit der Hauptwelle fest verbundenen Zahnscheibe und einem Sensor erfolgt, der an der Zahnscheibe radial oder axial angeordnet sein kann. Ein Nachteil hierbei ist, dass bei einer Taumelbewegung der Hauptwelle die mit der Hauptwelle fest verbundene Zahnscheibe ebenfalls dieser Taumelbewegung folgt. Da eine solche Zahnscheibe einen relativ großen Durchmesser aufweist, sind auch die durch die Taumelbewegung erzeugten Bewegungen der Zahnscheibe entsprechend groß. Die Zahnscheibe darf sich messtechnisch bedingt allerdings nur in einem sehr kleinen Toleranzfeld bewegen. Bewegt sich die Zahnscheibe aus diesem Toleranzfeld heraus, ist eine exakte Drehzahlmessung nicht mehr gewährleistet, weil durch den Sensor die Zähne bzw. Zahnlücken der Zahnscheibe nicht mehr zuverlässig erfasst werden können. Des Weiteren muss hier ein intelligenter Sensor eingesetzt werden, der trotz der Taumelbewegung der Hauptwelle ein korrektes Signal ausgibt. Ein solcher Sensor ist allerdings wesentlich teurer als ein herkömmlicher Drehzahlsensor ohne zusätzliche Auswerteelektronik. Auch wird die Getriebebaulänge um die Zahnscheibenstärke entsprechend verlängert.

In der nicht vorveröffentlichten Anmeldung der Anmelderin mit dem Aktenzeichen 10 2006 023 554 wird eine Anordnung zur Ermittlung der Drehzahl einer Getriebewelle offenbart. Die Anordnung weist einen mit der Getriebewelle drehfest verbundenen Drehzahlgeber und einen feststehenden Drehzahlsensor auf, mittels dessen die Drehzahl an dem Drehzahlgeber abgreifbar ist. Der Drehzahlgeber ist am Umfang einer axial verschiebbar und drehfest an der Getriebewelle angeordneten Schiebemuffe vorgesehen. Der Drehzahlsensor ist an einem langen Sensorarm angeordnet und wird derart an der Schiebemuffe positioniert, dass die Drehzahl in radialer Richtung an dem Drehzahlgeber abgreifbar ist.

Ein Nachteil hierbei ist, dass zur Positionierung des Drehzahlsensors ein langer frei hängender Sensorarm benötigt wird. Je länger ein solcher Sensorarm ausgebildet ist, desto größer ist die Gefahr, dass er bei einer äußeren Schwingungsanregung selbst zu schwingen beginnt. Durch diese Schwingung kann ein fehlerhaftes Drehzahlsignal entstehen. Auch hier muss ein intelligenter Sensor eingesetzt werden, der trotz der Taumelbewegung der Hauptwelle ein korrektes Signal ausgibt. Um Kollisionen bei einem Schaltvorgang zu vermeiden, muss der Sensorarm in eine Schaltgabelöffnung eintauchen können, wobei die Schaltgabelarme der Schaltgabel asymmetrisch ausgebildet werden müssen und die Schaltgabel nicht massiv gefertigt werden kann.

Der vorliegenden Erfindung liegt die Aufgabe zugrunde, eine Vorrichtung zur Ermittlung der Drehzahl einer Getriebewelle darzustellen, durch welche eine sichere Drehzahlerfassung ermöglicht wird und durch welche die Nachteile des Standes der Technik beseitigt bzw. minimiert werden.

Die der Erfindung zugrunde liegende Aufgabe wird durch eine, auch die kennzeichnenden Merkmale des Hauptanspruchs aufweisende, gattungsgemäße Vorrichtung zur Ermittlung der Drehzahl einer Getriebewelle gelöst.

Die erfindungsgemäße Vorrichtung zur Ermittlung der Drehzahl einer Getriebewelle umfasst einen drehfest mit einer Getriebewelle verbundenen Drehzahlgeber und wenigstens einen Drehzahlsensor. Der Drehzahlsensor weist zumindest ein Sensorelement auf, mittels dessen die Drehzahl der Getriebewelle an dem Drehzahlgeber abgreifbar ist. Erfindungsgemäß ist der Drehzahlsensor an einem Schaltelement zum Betätigen einer auf der Getriebewelle axial verschiebbaren und drehfest mit der Getriebewelle verbundenen Schiebemuffe einer Kupplungseinrichtung befestigt. Der Drehzahlsensor kann hierbei beispielsweise mit dem Schaltelement verschraubt, vernieten oder an das Schaltelement angeschweißt werden. Der Drehzahlsensor kann beispielsweise als Hall-Effekt-Sensor oder als Induktionssensor ausgebildet sein und bei der Getriebewelle kann es sich beispielsweise um eine Hauptwelle eines Kraftfahrzeuggetriebes handeln.

In einer bevorzugten Ausführungsform der erfindungsgemäßen Vorrichtung ist der Drehzahlgeber am Umfang der Schiebemuffe der Kupplungseinrichtung vorgesehen, welche in axialer Richtung der Getriebewelle in eine Neutralstellung, eine erste Kupplungsstellung und eine zweite Kupplungsstellung bringbar ist. Durch die Schiebemuffe können zu kuppelnde Getriebeteile mit der entsprechenden Getriebewelle drehfest verbunden werden. Die zu kuppelnden Getriebeteile sind vorzugsweise als sogenannte Loszahnräder ausgebildet, die drehbar auf der Getriebewelle angeordnet sind und über entsprechende klauenartige Kurzverzahnungen, welche sich beispielsweise seitlich an den Loszahnrädern befinden, durch die Schiebemuffe mit der entsprechenden Getriebewelle drehfest verbunden werden können. Zur Schalterleichterung können solche Kupplungseinrichtungen mit Synchronisier- und/oder Sperrsynchronisiereinrichtungen ergänzt werden.

In einer besonders bevorzugten Ausführungsform der erfindungsgemäßen Vorrichtung weist die Schiebemuffe eine Außenverzahnung auf, die mit einer Innenverzahnung eines zu kuppelnden Getriebeteils, insbesondere eines Loszahnrads, in Eingriff gebracht werden kann. Der Drehzahlgeber wird bei dieser Ausführungsform von der Außenverzahnung der Schiebemuffe gebildet, wodurch die Außenverzahnung der Schiebemuffe in unveränderter Form auch als Drehzahlgeber verwendet werden kann.

In einer weiteren bevorzugten Ausführungsform der erfindungsgemäßen Vorrichtung weist die Schiebemuffe eine umlaufende Nut auf, in die das Schaltelement zum Betätigen der Schiebemuffe eingreift. Bei dieser Ausführungsform weist die Außenverzahnung der Schiebemuffe zwei seitliche Außenverzahnungsabschnitte auf, zwischen denen sich die umlaufende Nut erstreckt.

In einer vorteilhaften Ausführungsform der erfindungsgemäßen Vorrichtung ist der Drehzahlsensor derart ausgebildet und an dem Schaltelement zum Betätigen der Schiebemuffe angeordnet, dass das an bzw. in dem Drehzahlsensor angeordnete Sensorelement in die umlaufende Nut der Schiebemuffe hinein ragt und die Drehzahl der Schiebemuffe und somit die Drehzahl der Getriebewelle in axialer Richtung an zumindest einer der Nut zugewandten Seitenflächen der Außenverzahnungsabschnitte abgreift. Somit ist sichergestellt, dass das Sensorelement des Drehzahlsensors in jeder Schaltstellung auf die gleiche Messverzahnung zugreifen kann, wodurch eine hohe Signalqualität erreicht werden kann. Die Schiebemuffe, das Schaltelement und der an dem Schaltelement befestigte Drehzahlsensor folgen der Taumelbewegung der Getriebewelle. Somit kann die das Messsignal negativ beeinflussende Relativbewegung zwischen dem Sensorelement und der Messverzahnung, welche durch die Taumelbewegung der Getriebewelle verursacht wird, im Vergleich zum Stand der Technik deutlich verringert werden. Ein zwischen dem Drehzahlsensor und der Außenverzahnung benötigter Luftspalt kann sehr klein ausgeführt werden, da bei einem Schaltvorgang keine Kollisionsgefahr besteht. Somit kann bei der erfindungsgemäßen Vorrichtung zur Erfassung der Drehzahl einer Getriebewelle ein Standardsensor eingesetzt und auf einen teuren intelligenten Sensor mit entsprechender Auswerteelektronik verzichtet werden. Des Weiteren ist es denkbar, dass der Drehzahlsensor und die Schiebemuffe derart ausgebildet sind, dass der Drehzahlsensor die Drehzahl der Schiebemuffe in radialer Richtung an der Außenverzahnung abgreift. Hierfür müsste die Schiebemuffe entsprechend breiter ausgebildet sein, damit der Drehzahlsensor auch dann, wenn sich die Schiebemuffe in einer ihrer Kupplungsstellungen befindet, die Außenverzahnung der Schiebemuffe noch erfassen kann und nicht mit dem zu kuppelnden Getriebeteil kollidiert.

In einer weiteren vorteilhaften Ausführungsform der erfindungsgemäßen Vorrichtung ist der Drehzahlsensor als autarke Sensoreinheit ausgebildet, welche wenigstens einen Sender und eine integrierte Energieversorgung umfasst. Das Sensorsignal wird von dem Sender drahtlos an einen entsprechenden Empfänger, der in bzw. an einem Sensormodul und/oder einem elektronischen Steuergerät angeordnet ist, übertragen. Die Signalübertragung kann beispielsweise über elektromagnetische Funkwellen erfolgen. Das elektronische Steuergerät ist beispielsweise als Steuergerät für die Getriebesteuerung eines Kraftfahrzeugs ausgebildet. Durch die drahtlose Signalübertragung kann eine aufwendige und teure Kabelverlegung entfallen. Das Getriebegehäuse muss hierbei gegebenenfalls einen Bereich aufweisen, der für elektromagnetische Wellen durchlässig ist. Die Energieversorgung der autarken Sensoreinheit kann beispielsweise über eine Akku- oder Batterieversorgung sichergestellt werden.

Die notwendige Energie zum Betrieb der Sensoreinheit ist in einer besonders bevorzugten Ausführungsform durch eine mechanische Schwingungsenergie erzeugbar. Ein Piezo-Element, beispielsweise in Form einer piezoelektrischen Folie oder eines piezoelektrischen Keramikplättchens, ist hierfür im bzw. am Sensorgehäuse der Sensoreinheit angeordnet. Vorteilhafterweise ist das Piezo-Element derart im Sensorgehäuse der Sensoreinheit angeordnet, dass zur Energieerzeugung die mechanische Schwingungsenergie, die bei einem Schaltvorgang und/oder durch die Taumelbewegung der Getriebewelle entsteht, durch das Piezo-Element in elektrische Energie umgewandelt wird. Bei einem Schaltvorgang trifft die Schiebemuffe auf das zu kuppelnde Getriebeteil, wobei ein Teil der kinetischen Energie des Schaltelements beim Auftreffen der Schiebemuffe auf das zu kuppelnde Getriebeteil in elektrische Energie umgewandelt wird. Ebenso ist es denkbar, dass die notwendige Energie zum Betrieb der Sensoreinheit durch einen Vibrationsgenerator erzeugt wird, welcher die bei einem Schaltvorgang und/oder durch die Taumelbewegung der Getriebewelle auf die Sensoreinheit wirkenden Schwingungen bzw. Vibrationen in elektrische Energie umwandelt.

In einer weiteren Ausführungsform der erfindungsgemäßen Vorrichtung steht der Drehzahlsensor über wenigstens eine Verbindungsleitung mit dem Sensormodul und/oder dem elektronischen Steuergerät in Verbindung und das Sensorsignal ist über die Verbindungsleitung an das Sensormodul und/oder das elektronische Steuergerät übertragbar.

In einer besonders bevorzugten Ausführungsform der erfindungsgemäßen Vorrichtung ist das Schaltelement zum Verschieben der Schiebemuffe als Schaltgabel ausgebildet, welche beispielsweise durch eine Schaltschiene betätigbar ist.

Somit wird bei der erfindungsgemäßen Vorrichtung zur Ermittlung der Drehzahl einer Getriebewelle weder eine als Drehzahlgeber ausgebildete Zahnscheibe noch ein langer Sensorarm zur Positionierung des Drehzahlsensors an dem Drehzahlgeber benötigt. Auch wird bei der erfindungsgemäßen Vorrichtung kein intelligenter Sensor mit aufwendiger integrierter Auswerteelektronik benötigt und das Sensorsignal kann in jeder Kupplungsstellung der Schiebemuffe an derselben Messverzahnung abgegriffen werden.

Das erfindungsgemäße Getriebe für insbesondere ein Kraftfahrzeug weist die erfindungsgemäße Vorrichtung zur Ermittlung der Drehzahl einer Getriebewelle auf.

In einer bevorzugten Ausführungsform des erfindungsgemäßen Getriebes ist die Getriebewelle als Hauptwelle des Getriebes ausgebildet, wobei ferner zwei Vorgelegewellen vorgesehen sind, zwischen denen die Hauptwelle schwimmend gelagert ist.

Im Folgenden wird das Grundprinzip der Erfindung, welche mehrere Ausführungsformen zulässt, an Hand einer Zeichnung beispielhaft näher erläutert. Es zeigen:
Fig. 1 eine Ausführungsform der erfindungsgemäßen Vorrichtung zur Ermittlung der Drehzahl einer Getriebewelle und
Fig. 2 eine Ausführungsform der erfindungsgemäßen Vorrichtung in teilweise geschnittener Darstellung.

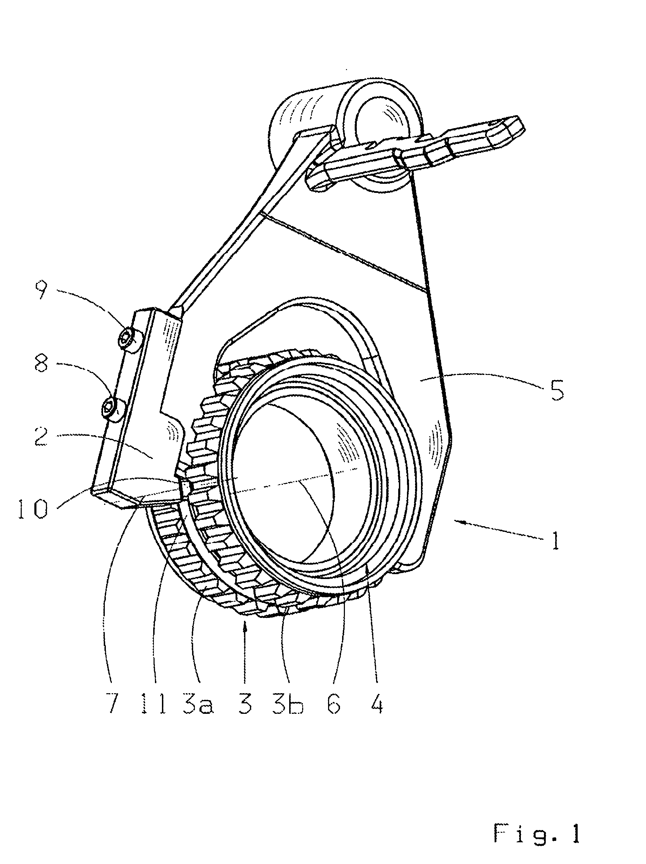

Die in der Fig. 1 dargestellte Ausführungsform der erfindungsgemäßen Vorrichtung zur Ermittlung der Drehzahl einer Getriebewelle umfasst einen Drehzahlsensor 2 und einen Drehzahlgeber 3. Der Drehzahlsensor 2 weist hier ein Sensorelement 10 auf, mittels dessen die Drehzahl an dem Drehzahlgeber 3 abgreifbar ist. Der Drehzahlgeber 3 wird bei dieser Ausführungsform von der Außenverzahnung einer Schiebemuffe 4 einer Kupplungseinrichtung 1 gebildet. Der Drehzahlsensor 2 ist an einem Schaltelement 5 angeordnet, wobei das Schaltelement 5 als Schaltgabel zum Betätigen der Schiebemuffe 4 ausgebildet ist. Mittels Befestigungselementen 8, 9 ist der Drehzahlsensor 2 fest mit der Schaltgabel 5 verschraubt. Die Schiebemuffe 4 weist eine umlaufende Nut 11 auf, in die die Schaltgabel 5 zum Betätigen der Schiebemuffe 4 eingreift. Die Außenverzahnung 3 der Schiebemuffe weist zwei seitliche Außenverzahnungsabschnitte 3a, 3b auf, zwischen denen sich die umlaufende Nut 11 erstreckt.

Der Drehzahlsensor 2 ist derart ausgebildet und an der Schaltgabel 5 zum Betätigen der Schiebemuffe 4 angeordnet, dass das in dem Drehzahlsensor 2 angeordnete Sensorelement 10 in die umlaufende Nut 11 der Schiebemuffe 4 hinein ragt und die Drehzahl der Schiebemuffe 4 in axialer Richtung an einer der Nut 11 zugewandten Seitenflächen der Außenverzahnungsabschnitte 3a, 3b abgreift. Somit ist sichergestellt, dass das Sensorelement 10 des Drehzahlsensors 2 in jeder Schaltstellung der Schiebemuffe 4, welche in axialer Richtung zu einer Getriebehauptachse 6 in eine Neutralstellung, eine erste Kupplungsstellung und eine zweite Kupplungsstellung bringbar ist, auf die gleiche Messverzahnung 3a, 3b zugreift, wodurch eine hohe Signalqualität erreichbar ist. Ein zwischen dem Drehzahlsensor 2 und den Außenverzahnungsabschnitten 3a, 3b benötigter Luftspalt kann sehr klein ausgeführt werden, da bei einem Schaltvorgang keine Kollisionsgefahr besteht. Der Drehzahlsensor 2 ist hier derart an der Schaltgabel 5 angeordnet, dass die Sensormessachse 7 parallel zu der Getriebehauptachse 6 liegt.

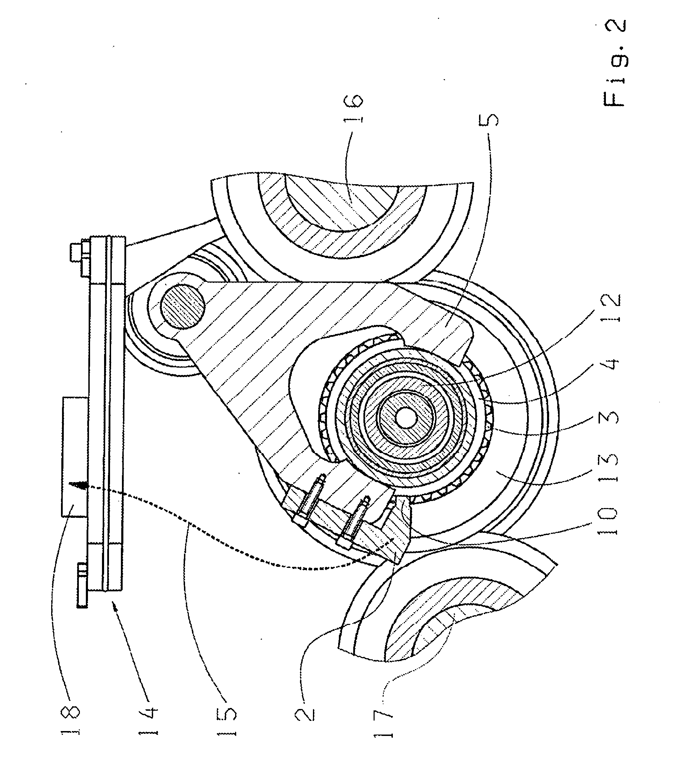

Die Fig. 2 zeigt die in der Fig. 1 beschriebene Ausführungsform der erfindungsgemäßen Vorrichtung in geschnittener Darstellung. Die Schiebemuffe 4 ist auf einer Getriebewelle 12 axial verschiebbar angeordnet und mit der Getriebewelle 12 drehfest verbunden. Die Getriebewelle 12 ist hier als Hauptwelle eines Kraftfahrzeuggetriebes ausgebildet, wobei ferner zwei Vorgelegewellen 16, 17 vorgesehen sind, zwischen denen die Hauptwelle 12 schwimmend gelagert ist. Durch die Schiebemuffe 4 können Loszahnräder 13, die drehbar auf der Hauptwelle 12 angeordnet sind über entsprechende klauenartige Kurzverzahnungen, welche sich beispielsweise seitlich an den Loszahnrädern 13 befinden, mit der Hauptwelle 12 drehfest verbunden werden.

Bei einer Taumelbewegung der Hauptwelle 12 folgen sowohl die Schiebemuffe 4 und die Schaltgabel 5 als auch der an der Schaltgabel 5 befestigte Drehzahlsensor 2 dieser Taumelbewegung, wodurch die das Messsignal negativ beeinflussende Relativbewegung zwischen dem Sensorelement 10 und der Messverzahnung 3a, 3b, welche durch die Taumelbewegung der Hauptwelle 12 verursacht wird, so gering ist, dass das Messsignal trotz der Taumelbewegung der Hauptwelle 12 mittels eines Standardsensors erfassbar ist und somit auf einen teuren intelligenten Sensor mit entsprechender Auswerteelektronik verzichtet werden kann.

Der Drehzahlsensor 2 ist hier als autarke Sensoreinheit ausgebildet, welche wenigstens einen Sender und eine integrierte Energieversorgung umfasst (hier nicht dargestellt). Das Sensorsignal wird von dem Sender drahtlos an einen entsprechenden Empfänger 18, der hier an einem Sensormodul 14 angeordnet ist, übertragen. Die drahtlose Signalübertragung 15 kann beispielsweise über elektromagnetische Funkwellen erfolgen. Durch die drahtlose Signalübertragung 15 kann eine aufwendige und teure Kabelverlegung entfallen.

Ein hier nicht dargestelltes Piezo-Element ist derart im bzw. am Gehäuse des Drehzahlsensors 2 angeordnet, dass zur Energieerzeugung die mechanische Schwingungsenergie, die bei einem Schaltvorgang und/oder durch die Taumelbewegung der Hauptwelle 12 entsteht, durch das Piezo-Element in elektrische Energie umgewandelt wird. Bei einem Schaltvorgang trifft die Schiebemuffe 4 auf das zu kuppelnde Loszahnrad 13, wobei ein Teil der kinetischen Energie der Schaltgabel 5 beim Auftreffen der Schiebemuffe 4 auf das Loszahnrad 13 in elektrische Energie umgewandelt wird.

### Bezugszeichen

- 1: Kupplungseinrichtung
- 2: Drehzahlsensor
- 3: Drehzahlgeber, Außenverzahnung der Schiebemuffe
- 3a: Messverzahnung, Außenverzahnungsabschnitt der Schiebemuffe
- 3b: Messverzahnung, Außenverzahnungsabschnitt der Schiebemuffe
- 4: Schiebemuffe
- 5: Schaltelement, Schaltgabel
- 6: Getriebehauptachse
- 7: Sensormessachse
- 8: Befestigungselement
- 9: Befestigungselement
- 10: Sensorelement
- 11: umlaufende Nut
- 12: Getriebewelle, Hauptwelle
- 13: zu kuppelndes Getriebeteil, Loszahnrad
- 14: Sensormodul
- 15: drahtlose Signalübertragung, elektromagnetische Funkwellen
- 16: Vorgelegewelle
- 17: Vorgelegewelle
- 18: Empfänger

## Patentansprüche

1. Vorrichtung zur Ermittlung der Drehzahl einer Getriebewelle (12), welche einen drehfest mit der Getriebewelle (12) verbundenen Drehzahlgeber (3) und zumindest einen Drehzahlsensor (2) mit zumindest einem Sensorelement (10) umfasst, wobei mittels des Sensorelements (10) die Drehzahl der Getriebewelle (12) an dem Drehzahlgeber (3) abgreifbar ist, **dadurch gekennzeichnet, dass** der Drehzahlsensor (2) an einem Schaltelement (5) zum Betätigen einer auf der Getriebewelle (12) axial verschiebbaren und drehfest mit der Getriebewelle (12) verbundenen Schiebemuffe (4) einer Kupplungseinrichtung (1) befestigt ist.

2. Vorrichtung nach Anspruch 1, **dadurch gekennzeichnet, dass** der Drehzahlgeber (3) am Umfang der Schiebemuffe (4) der Kupplungseinrichtung (1) vorgesehen ist, welche in axialer Richtung der Getriebewelle (12) in eine Neutralstellung, eine erste Kupplungsstellung und eine zweite Kupplungsstellung bringbar ist.

3. Vorrichtung nach Anspruch 1 oder 2, **dadurch gekennzeichnet, dass** der Drehzahlgeber (3) durch eine Außenverzahnung der mit der Getriebewelle (12) drehfest verbundenen Schiebemuffe (4) ausgebildet ist.

4. Vorrichtung nach wenigstens einem der Ansprüche 1 bis 3, **dadurch gekennzeichnet, dass** eine umlaufende Nut (11) in der Schiebemuffe (4) vorgesehen ist, in die das Schaltelement (5) zum Betätigen der Schiebemuffe (4) eingreift, wobei die Außenverzahnung (3) der Schiebemuffe (4) zwei seitliche Außenverzahnungsabschnitte (3a, 3b) aufweist, zwischen denen sich die umlaufende Nut (11) erstreckt.

5. Vorrichtung nach wenigstens einem der vorangegangenen Ansprüche, **dadurch gekennzeichnet, dass** der Drehzahlsensor (2) derart ausgebildet und an dem Schaltelement (5) angeordnet ist, dass das an bzw. in dem Drehzahlsensor (2) angeordnete Sensorelement (10) in die umlaufende Nut (11) der Schiebemuffe (4) hinein ragt und die Drehzahl der Schiebemuffe (4) und somit die Drehzahl der Getriebewelle (12) in axialer Richtung an zumindest einer der Nut (11) zugewandten Seitenflächen der Außenverzahnungsabschnitte (3a, 3b) abgreift.

6. Vorrichtung nach wenigstens einem der vorangegangenen Ansprüche, **dadurch gekennzeichnet, dass** der Drehzahlsensor (2) als autarke Sensoreinheit ausgebildet ist, welche einen Sender und eine integrierte Energieversorgung umfasst und das Sensorsignal drahtlos an ein Sensormodul (14) und/oder an ein elektronisches Steuergerät übertragbar ist.

7. Vorrichtung nach Anspruch 6, **dadurch gekennzeichnet, dass** die notwendige elektrische Energie zum Betrieb der Sensoreinheit durch eine mechanische Schwingungsenergie erzeugbar ist.

8. Vorrichtung nach Anspruch 7, **dadurch gekennzeichnet, dass** zur Energieerzeugung die mechanische Schwingungsenergie, die bei einem Schaltvorgang und/oder durch eine Taumelbewegung der Getriebewelle (12) entsteht, durch ein Piezo-Element in elektrische Energie umwandelbar ist.

9. Vorrichtung nach wenigstens einem der Ansprüche 1 bis 5, **dadurch gekennzeichnet, dass** der Drehzahlsensor (2) über wenigstens eine Verbindungsleitung mit dem Sensormodul (14) und/oder dem elektronischen Steuergerät in Verbindung steht und das Sensorsignal über die Verbindungsleitung übertragbar ist.

10. Vorrichtung nach wenigstens einem der vorangegangenen Ansprüche, **dadurch gekennzeichnet, dass** das Schaltelement (5) zum Verschieben der Schiebemuffe (4) als Schaltgabel ausgebildet ist.

11. Getriebe für ein Kraftfahrzeug mit einer Vorrichtung nach wenigstens einem der vorangegangenen Ansprüche.

12. Getriebe nach Anspruch 11, **dadurch gekennzeichnet, dass** die Getriebewelle (12) als Hauptwelle des Getriebes ausgebildet ist, wobei ferner zwei Vorgelegewellen (16,17) vorgesehen sind, zwischen denen die Hauptwelle (12) schwimmend gelagert ist.

## Claims

1. Device for determining the rotational speed of a gearbox shaft (12), which device comprises a rotational speed encoder (3), which is connected to the gearbox shaft (12) for conjoint rotation therewith, and at least one rotational speed sensor (2) with at least one sensor element (10), with it being possible by means of the sensor element (10) for the rotational speed of the gearbox shaft (12) to be picked off on the rotational speed encoder (3), **characterized in that** the rotational speed sensor (2) is fastened to a shift element (5) for actuating a sliding sleeve (4), which is axially movable on the gearbox shaft (12) and is connected to the gearbox shaft (12) for conjoint rotation therewith, of a clutch device (1).

2. Device according to Claim 1, **characterized in that** the rotational speed encoder (3) is provided on the circumference of the sliding sleeve (4) of the clutch device (1), which sliding sleeve (4) can be placed into a neutral position, a first clutch position and a second clutch position in the axial direction of the gearbox shaft (12).

3. Device according to Claim 1 or 2, **characterized in that** the rotational speed encoder (3) is formed by an external toothing of the sliding sleeve (4) which is connected to the gearbox shaft (12) for conjoint rotation therewith.

4. Device according to at least one of Claims 1 to 3, **characterized in that** an encircling groove (11) is provided in the sliding sleeve (4), into which groove (11) the shift element (5) for actuating the sliding sleeve (4) engages, with the external toothing (3) of the sliding sleeve (4) having two lateral external toothing sections (3a, 3b) between which the encircling groove (11) extends.

5. Device according to at least one of the preceding claims, **characterized in that** the rotational speed sensor (2) is designed and arranged on the shift element (5) such that the sensor element (10) which is arranged on or in the rotational speed sensor (2) projects into the encircling groove (11) of the sliding sleeve (4) and picks off the rotational speed of the sliding sleeve (4), and therefore the rotational speed of the gearbox shaft (12), in the axial direction on at least one of the side surfaces, which face towards the groove (11), of the external toothing sections (3a, 3b).

6. Device according to at least one of the preceding claims, **characterized in that** the rotational speed sensor (2) is formed as an autarkic sensor unit which comprises a transmitter and an integrated energy supply, and the sensor signal can be transmitted wirelessly to a sensor module (14) and/or to an electronic control unit.

7. Device according to Claim 6, **characterized in that** the required electrical energy for operating the sensor unit can be generated by means of mechanical vibration energy.

8. Device according to Claim 7, **characterized in that**, for energy generation, the mechanical vibration energy generated during a shift process and/or by a tumbling movement of the gearbox shaft (12) can be converted into electrical energy by a piezo element.

9. Device according to at least one of Claims 1 to 5, **characterized in that** the rotational speed sensor (2) is connected via at least one connecting line to the sensor module (14) and/or to the electronic control unit, and the sensor signal can be transmitted via the connecting line.

10. Device according to at least one of the preceding claims, **characterized in that** the shift element (5) for moving the sliding sleeve (4) is designed as a shift fork.

11. Gearbox for a motor vehicle having a device according to at least one of the preceding claims.

12. Gearbox according to Claim 11, **characterized in that** the gearbox shaft (12) is formed as a main shaft of the gearbox, with two countershafts (16, 17) also being provided, between which the main shaft (12) is mounted in a floating manner.

## Revendications

1. Dispositif pour déterminer la vitesse de rotation d'un arbre de transmission (12), qui comprend un tachymètre (3) connecté de manière solidaire en rotation à l'arbre de transmission (12) et au moins un capteur de vitesse de rotation (2) avec au moins un élément de capteur (10), la vitesse de rotation de l'arbre de transmission (12) pouvant être prélevée sur le tachymètre (3) au moyen de l'élément de capteur (10), **caractérisé en ce que** le capteur de vitesse de rotation (2) est fixé sur un élément de commutation (5) pour actionner un manchon coulissant (4) d'un dispositif d'embrayage (1) connecté de manière solidaire en rotation à l'arbre de transmission (12) et déplaçable axialement sur l'arbre de transmission (12).

2. Dispositif selon la revendication 1, **caractérisé en ce que** le tachymètre (3) est prévu sur la périphérie du manchon coulissant (4) du dispositif d'embrayage (1), qui peut être amené dans la direction axiale de l'arbre de transmission (12) dans une position neutre, une première position d'embrayage et une deuxième position d'embrayage.

3. Dispositif selon la revendication 1 ou 2, **caractérisé en ce que** le tachymètre (3) est réalisé par une denture extérieure du manchon coulissant (4) connecté de manière solidaire en rotation à l'arbre de transmission (12).

4. Dispositif selon au moins l'une quelconque des revendications 1 à 3, **caractérisé en ce qu'**une rainure périphérique (11) est prévue dans le manchon coulissant (4), dans laquelle vient en prise l'élément de commutation (5) pour l'actionnement du manchon coulissant (4), la denture extérieure (3) du manchon coulissant (4) présentant deux portions de denture extérieure (3a, 3b) latérales entre lesquelles s'étend la rainure périphérique (11).

5. Dispositif selon au moins l'une quelconque des revendications précédentes, **caractérisé en ce que** le capteur de vitesse de rotation (2) est réalisé et disposé sur l'élément de commutation (5) de telle sorte que l'élément de capteur (10) disposé sur ou dans le capteur de vitesse de rotation (2) pénètre dans la rainure périphérique (11) du manchon coulissant (4) et obtienne la vitesse de rotation du manchon coulissant (4) et donc la vitesse de rotation de l'arbre de transmission (12) dans la direction axiale sur au moins l'une des faces latérales tournées vers la rainure (11) des portions de denture extérieure (3a, 3b).

6. Dispositif selon au moins l'une quelconque des revendications précédentes, **caractérisé en ce que** le capteur de vitesse de rotation (2) est réalisé sous forme d'unité de capteur autarcique, qui comprend un émetteur et une alimentation en énergie intégrée et le signal de capteur peut être transmis sans fil à un module de capteur (14) et/ou à un appareil de commande électronique.

7. Dispositif selon la revendication 6, **caractérisé en ce que** l'énergie électrique nécessaire pour le fonctionnement de l'unité de capteur peut être produite par une énergie d'oscillation mécanique.

8. Dispositif selon la revendication 7, **caractérisé en ce que** pour la production d'énergie, l'énergie d'oscillation mécanique qui est produite dans le cas d'une opération de commutation et/ou par un mouvement de nutation de l'arbre de transmission (12), peut être convertie en énergie électrique par un élément piézoélectrique.

9. Dispositif selon au moins l'une quelconque des revendications 1 à 5, **caractérisé en ce que** le capteur de vitesse de rotation (2) est en liaison par le biais d'au moins une conduite de liaison avec le module de capteur (14) et/ou avec l'appareil de commande électronique et le signal de capteur peut être transmis par le biais de la conduite de liaison.

10. Dispositif selon au moins l'une quelconque des revendications précédentes, **caractérisé en ce que** l'élément de commutation (5) est réalisé sous forme de fourchette de sélection pour déplacer le manchon coulissant (4).

11. Transmission pour un véhicule automobile comprenant un dispositif selon au moins l'une quelconque des revendications précédentes.

12. Transmission selon la revendication 11, **caractérisée en ce que** l'arbre de transmission (12) est réalisé sous forme d'arbre principal de la transmission, et deux arbres intermédiaires (16, 17) sont en outre prévus, entre lesquels l'arbre principal (12) est monté flottant.
